# FASCICULE DE BREVET EUROPEEN

(11) **EP 0 681 620 B1**
(45) Date de publication et mention de la délivrance du brevet: **11.11.1998**
(21) Numéro de dépôt: 94904535.5
(22) Date de dépôt: 25.01.1994
(51) Int. Cl.: D04H 13/00

(54) **PROCEDE DE FABRICATION D'UN NON-TISSE ET NON-TISSE OBTENU PAR CE PROCEDE**
VERFAHREN ZUR HERSTELLUNG EINES VLIESSTOFFS UND DADURCH ERHALTENER VLIESSTOFF
METHOD FOR PRODUCING A NONWOVEN AND NONWOVEN THEREBY OBTAINED

(30) Priorité: 26.01.1993 FR 9300746
(43) Date de publication de la demande: 15.11.1995
(73) Titulaire: LIBELTEX N.V., B-8760 Meulebeke (BE)
(72) Inventeur: VAN KERREBROUCK, Jozef, B-8730 Sint-Joris-ten-Distel (BE)
(74) Mandataire: Bairiot-Delcoux, Mariette
(86) Numéro de dépôt international: BE9400008
(87) Numéro de publication internationale: WO9417234

(56) Documents cités:
- EP-A- 0 469 309
- WO-A-91/10768
- WO-A-92/05949
- US-A- 4 445 954

## Description

### Objet de l'invention.

L'invention concerne un procédé de fabrication d'un non-tissé multicouche ainsi que le non-tissé obtenu par ce procédé.

### Arrière-plan technologique et état de la technique.

La technologie de formation d'étoffe non-tissée par voie sèche consiste à former des nappes de fibres ou de filaments, qui sont ensuite consolidées par liage des fibres de manière mécanique (aiguilletage), chimique ou thermique.

Des non-tissés multicouches sont déjà connus dans l'état de la technique.

On connaît du brevet US-A 3 298 080, un procédé pour produire un non-tissé aiguilleté à plusieurs couches, présentant un gradient de finesse. Les couches internes présentent les fibres les plus fines. En outre, l'orientation des fibres varie de couche en couche. Dans cette technique, on forme la nappe en superposant les différentes couches de fibres lâchement enchevêtrées, puis on procède à l'aiguilletage afin de lier les différentes couches entre elles. L'enchevêtrement des fibres est de plus en plus grand lorsqu'on approche du centre de la nappe. C'est donc surtout la couche interne qui est rigide, les couches externes étant plus souples.

On connaît du brevet US-A-5 106 679, un matériau composite autoportant à trois couches, pouvant être utilisé comme plafond intérieur de véhicule. La rigidité est obtenue grâce à une âme fibreuse comprenant des fibres de palmier ou de lin et un matériau de renforcement fibreux, cette âme étant comprise entre deux couches de revêtement de surface.

A cause de l'hétérogénéité de sa composition, un tel produit ne peut être entièrement recyclable.

On connaît encore du document US-A-4 840 832, un plafond de voiture flexible et élastique constitué notamment d'un non-tissé composé de fibres liantes. Dans ce procédé des fibres de polymère sont éventuellement liées ensemble par un aiguilletage léger en une multiplicité de points de manière à former une nappe cohérente d'une stabilité permettant de la manipuler ultérieurement et de l'enrouler. Ce non-tissé n'atteint pas la rigidité souhaitée pour être auto-portant.

Il est encore connu d'obtenir des non-tissés à trois couches, aiguilletés et thermoliés ayant une grande rigidité. En effet, on connaît par la demande de brevet internationale WO-A-92/05949, un procédé pour fabriquer un non-tissé rigide composé de 3 couches. Les couches externes se composent de fibres à point de fusion relativement bas. La couche interne est composée d'un mélange de fibres du même type avec des fibres à point de fusion plus élevé. Dans ce procédé, chaque couche est préalablement liée et enroulée, puis on lie les différentes couches entre-elles par aiguilletage. Cet aiguilletage est donc réalisé au travers des différentes couches et, de plus entraîne des fibres des couches externes dans la couche interne. Ensuite, on chauffe le composite à trois couches jusqu'à un niveau supérieur au point de fusion des fibres du premier type, de manière à former une structure plastifiée.

Il n'est pas prévu que ce produit soit moulé par la suite, il est utilisé exclusivement en plaques.

Par la demande de brevet EP-A-0 388 062, on connaît un procédé de fabrication d'un matériel absorbant composé d'un non-tissé lié par aiguilletage dont l'aiguilletage n'est pas réalisé au travers de toute l'épaisseur de la nappe de fibre. On parle dans ce cas d'aiguilletage progressif. On obtient alors un non-tissé de densité progressive, utile comme matériel absorbant. Ce non-tissé est constitué d'une seule couche de fibres et n'est pas thermoformable.

Par la demande de brevet EP-A-0 476 538, on connaît un procédé de fabrication d'un non-tissé aiguilleté et moulé par thermoliage, utilisé dans l'industrie automobile. Ce produit est composé de fibres de polyester, polyamide ou polyoléfine et comporte deux types de fibres, des fibres collantes et des fibres non collantes. Les fibres collantes sont des fibres hautement amorphes, c'est-à-dire qui se ramolissent et cristallisent définitivement lors du thermoliage. Une fois lié, ce non-tissé ne peut donc plus être thermodéformé par moulage.

### Buts de l'invention.

L'invention a pour but de fabriquer selon un procédé simple et rapide un non-tissé thermoformable, c'est-à-dire pouvant être mis en forme postérieurement par moulage.

De plus, l'invention a pour but de fabriquer un non-tissé rigide et autoportant.

L'invention a encore pour but de fabriquer un non-tissé flexible et déformable.

Elle a également pour but de produire une telle structure qui soit entièrement recyclable.

Elle a également pour but de mettre au point un tel procédé qui comporte moins d'étapes que les procédés connus de l'état de la technique.

Elle a encore pour but de fournir un procédé qui permette d'obtenir rapidement un tel matériau composite à partir de fibres brutes.

### Eléments essentiels de l'invention.

Le procédé de fabrication de non-tissé selon l'invention se caractérise par une combinaison particulière de liage mécanique et thermique d'une composition fibreuse qui est constituée d'au moins trois couches.

La présente invention a pour objet un non-tissé comportant deux couches de fibres extérieures et au moins une couche de fibres intérieure, composé de fibres constructives et de fibres liantes. Les dites fibres liantes ont au moins pour une partie de la fibre un point de fusion inférieur à celui des fibres constructives. Par fibres constructives on entend des fibres dont le point de fusion est supérieur à la température de thermoliage du non-tissé. Les dites fibres liantes sont composées au moins partiellement d'au moins un polymère dont le point de fusion est inférieur à celui des fibres constructives.

Le non-tissé suivant l'invention est densifié par un aiguilletage de part et d'autre jusqu'à une profondeur déterminée, une zone centrale non densifiée par aiguilletage subsistant.

Suivant un mode de réalisation possible, cette zone centrale non densifiée correspond en substance à la couche de fibres intérieure.

Cette zone centrale non densifiée comprend au moins une partie de la couche de fibres intérieure. La profondeur d'aiguilletage correspond sensiblement à l'épaisseur des couches extérieures ou peut dépasser légèrement la limite entre les différentes couches de fibres.

La teneur (%) en polymère dont le point de fusion est inférieur à celui des fibres constructives est plus grande dans les couches extérieures que dans la ou les couches intérieures.

Les couches extérieures, qui servent principalement à donner la rigidité du produit après moulage, représentent par couche entre 5% et 40% en poids de la totalité du non-tissé. La ou les couches intérieures représentent donc entre 20% et 90% de la totalité du non-tissé.

Avantageusement, les couches extérieures constituent par couche entre 15% et 30% de la totalité du non-tissé. Ainsi la couche intérieure constitue particulièrement entre 40% et 70% de la totalité du non-tissé.

D'une manière avantageuse, les fibres liantes sont composées au moins en partie d'un polymère thermoplastique. Par thermoplastique on entend un polymère qui peut être fluidisé par élévation de la température par opposition aux polymères thermodurcissables pour lesquelles une fusion n'est pas possible.

Les fibres liantes peuvent être monocomposantes ou, avantageusement, bicomposantes. Dans le cas de fibres bicomposantes un seul des composants est un polymère dont le point de fusion est inférieur à celui des fibres constructives et va assurer la liaison thermique des fibres entre-elles. Ce polymère est de préférence thermoplastique.

Les couches extérieures comportent de 40 à 100% de fibres liantes et de 0% à 60% de fibres constructives, et de préférence de 60 à 80% de fibres liantes et de 20 à 40% de fibres constructives.

Avantageusement, la ou les couches intérieures comportent de 20 à 100% de fibres liantes de préférence de 20 à 90% ou de manière encore préférée de 40 à 60% de fibres liantes, et de O à 80% de fibres constructives, de préférence de 10 à 80% ou de manière encore préférée de 40 à 60% de fibres constructives.

On comprendra aisément que la teneur en fibres liantes dans les différentes couches est fonction du type de fibre liante choisie (monocomposante ou bicomposante).

Avantageusement, au moins une partie des fibres des couches extérieures sont plus fines qu'au moins une partie des fibres de la ou des couches intérieures.

D'une manière particulière, les fibres constructives des couches extérieures sont plus fines que les fibres constructives de la ou des couches intérieures.

En particulier, les fibres liantes des couches extérieures ont une épaisseur comprise entre 0,5 et 28 dtex, et de préférence entre 1,5 et 10 dtex.

En particulier, les fibres liantes de la ou des couches intérieures ont une épaisseur comprise entre 3 et 40 dtex, et de préférence entre 4 et 28 dtex.

En particulier, les fibres constructives des couches extérieures ont une épaisseur comprise entre 0,5 et 28 dtex et de préférence comprise entre 1,5 et 12 dtex.

En particulier, les fibres constructives de la ou des couches intérieures ont une épaisseur comprise entre 3 et 100 dtex et de préférence comprise entre 6 et 28 dtex.

Suivant un mode avantageux de réalisation de l'invention, les fibres composant le non-tissé appartiennent toutes à une même famille de polymères.

En particulier, les fibres comprennent 100% de polyester.

Suivant des variantes de réalisation de l'invention, les fibres comprennent 100% de polyamide ou 100% de polyoléfine.

D'une manière particulière, le non-tissé suivant l'invention est auto-portant et thermoformable.

Suivant une variante de réalisation de l'invention, le non-tissé comporte une couche de finition.

Suivant une autre variante de réalisation de l'invention, le non-tissé comporte un ou plusieurs renforts physiques.

La présente invention a encore pour objet un procédé de fabrication d'un non-tissé multicouche comportant des fibres constructives et des fibres liantes. Les dites fibres liantes sont composées au moins partiellement d'un polymère dont le point de fusion est inférieur à celui desdites fibres constructives. Le procédé suivant l'invention est caractérisé par les phases suivantes :
a) on construit par cardage et nappage une structure multicouche "sandwich" comportant au moins trois couches de fibres textiles coupées ou de filaments,
b) on procède à un aiguilletage superficiel laissant subsister une zone centrale non aiguilletée,
c) on procède au thermoliage du non-tissé. D'une manière avantageuse, les fibres liantes utilisées sont de type thermoplastique. Elles peuvent être monocomposantes ou, de préférence bicomposantes. Dans ce cas, un seul des composants est de type thermoplastique (et n'est pas susceptible de cristalliser).

Avantageusement, les couches extérieures comportent de 40 à 100% de fibres liantes et la ou les couches intérieures de 20 à 100% de fibres liantes.

Suivant des modes de réalisation particuliers du procédé suivant l'invention, les proportions de fibres utilisées et les caractéristiques des fibres utilisées sont telles que décrites précédemment.

Selon un mode particulier de réalisation du procédé suivant l'invention des renforts sont ajoutés lors de la phase de nappage. Ces renforts consistent notamment en des tissus, non-tissés, tricots, grilles ou films divers.

Suivant une variante de réalisation, le procédé suivant l'invention comporte une phase de finition, comme par exemple une imprégnation avec des traitements chimiques ou liants.

D'une manière particulière, le procédé suivant l'invention comporte une phase de moulage.

### Brève description des figures.

La Fig. 1 est une représentation schématique d'une structure non tissée suivant l'invention;
les Fig. 2 à 5 sont des représentations schématiques de différentes lignes de production permettant la mise en oeuvre du procédé de l'invention.

### Description détaillée des figures.

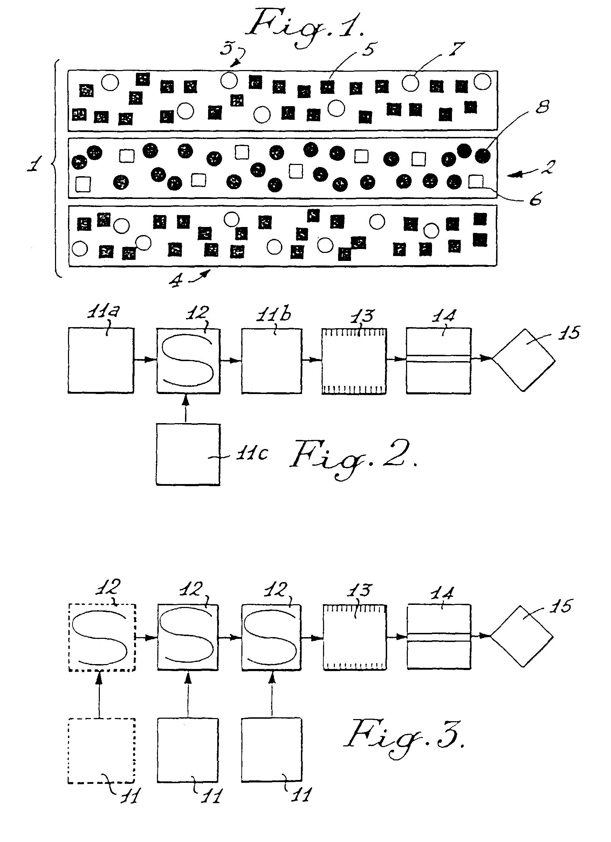

La structure représentée à la Fig. 1 est un exemple de non-tissé 1 qui peut être obtenu par le procédé de l'invention et présente trois couches distinctes, disposées en une configuration "sandwich". La couche intérieure 2 est disposée entre deux couches extérieures 3,4 de composition différente de celle de la couche 2. Les couches extérieures 3, 4 peuvent être soit identiques entre elles, soit légèrement différentes.

Le non-tissé 1 comporte des fibres liantes et éventuellement des fibres constructives.

La composition des couches de fibres est symbolisée de la manière suivante à la Fig. 1 : on a représenté par des carrés des fibres liantes, désignées respectivement par les numéros 5 et 6, selon le type de couche où elles sont présentes. Dans les couches extérieures 3, 4, les fibres liantes 5 sont représentées par des carrés noirs et dans la couche intérieure 2, les fibres liantes 6 sont représentées par des carrés blancs.

Ces fibres liantes 5,6 présentent, au moins pour une partie de la fibre, un point de fusion relativement bas, et, dans tous les cas, inférieur à celui des fibres constructives. On a représenté par des cercles les fibres constructives, désignées respectivement par les numéros 7 et 8, selon le type de couches où elles sont présentes. Dans les couches extérieures 3, 4, les fibres constructives 7 sont représentées par des cercles blancs et dans la couche intérieure 2, les fibres constructives 8 sont représentées par des cercles noirs.

Les fibres liantes 5, 6 peuvent être du type monocomposant ou de préférence du type bicomposant, c'est-à-dire comportant deux composants dont un seul a un point de fusion "bas" et sert de liant. Les fibres du type bicomposant peuvent être de structure biphasée ("side-by-side"), de structure coaxiale ("sheath-and-core") ou de structure conjuguée ("matrix/fibril").

Les différences entre les couches se situent notamment au niveau de la finesse des fibres, accessoirement au niveau de leur longueur et au niveau de la proportion de fibres des deux types. Les couches extérieures 3,4 et intérieure 2 se différencient encore par le mode de liage des fibres.

Les fibres constructives 7 des couches extérieures 3,4, sont plus fines que les fibres constructives 8 de la couche intérieure 2.

Parmi les fibres constructives de finesse désirée, on choisira de préférence pour les couches extérieures, les fibres les plus longues possible.

L'épaisseur des fibres constructives 7 des couches extérieures 3,4 peut varier de 0,5 dtex à 28 dtex, alors que l'épaisseur des fibres constructives 8 de la couche intérieure 2 peut varier de 3 à 100 dtex.

De plus, la proportion de fibres liantes 5 dans les couches extérieures 3,4 varie de 40 à 100% de la composition. La couche inférieure 4 peut éventuellement être légèrement plus souple que la couche supérieure 3. Dans ce cas, elle contient moins de fibres liantes 5 que la couche supérieure 3. Dans la couche intérieure 2, les fibres liantes 6 représentent de 20 à 100% de la composition.

Les fibres 5, 7 des couches extérieures 3, 4 ont été entremêlées par aiguilletage et sont donc enchevêtrées de chaque côté de la structure, ceci jusqu'à une profondeur déterminée, de préférence avoisinant la limite entre les couches extérieures 3,4 et intérieure 2.

Pour obtenir la structure décrite ci-dessus, on peut notamment appliquer le procédé de l'invention, telle que décrit ci-après d'une manière générale.

Dans une première phase, on mélange des fibres liantes 5 ou 6 respectivement avec des fibres constructives 7, 8 et on procède par cardage (seconde phase) à la formation des voiles non tissés. On peut utiliser autant de cardes que l'on souhaite obtenir de couches de compositions différentes. Alternativement, on peut également alimenter une carde unique par le système dit "split-feed", dans lequel l'alimentation d'une carde peut être divisée en compartiments recevant différents mélanges de fibres. Les cardes utilisées peuvent être du type peigné (Worsted, Cotton Card) ou pneumatique (Airlay). Elles sont disposées en ligne ou perpendiculairement sur la ligne en cas de nappage. Pour ce nappage, on pourrait utiliser un étaleur-nappeur (blamire) ou "camelback". Les différentes couches peuvent passer par une station d'étirage avant d'être liées. Des renforts comme des tissus, non-tissés, tricots, grilles ou films divers peuvent également être introduits à ce stade.

La nappe formée à la sortie de la batterie des cardes et étaleurs (deuxième phase) présente déjà une configuration "sandwich" en trois couches avant d'être liée. Il n'y a donc pas, contrairement aux techniques connues, d'étapes de formation de nappe en une couche, liage de celle-ci, puis de superposition de trois nappes.

Une première densification (troisième phase) se fait par un procédé d'aiguilletage, en surface, uniquement. Cette action mécanique de transport et emmêlement par les aiguilles sur les fibres a comme résultat une densification et une ténacité par les forces de friction et d'accrochage au niveau de la surface des fibres. Le procédé d'aiguilletage est réglé pour avoir cet effet jusqu'à une profondeur prédéterminée, uniquement dans les couches extérieures. Ainsi, on accentue la structure multicouche ou "sandwich" et donc on prononce davantage la rigidité du produit.

Le liage principal (quatrième phase) se fait thermiquement, en augmentant la température au-dessus du point de fusion des fibres liantes 5,6 ce qui a pour effet de les faire fondre totalement ou partiellement. Dans le cas de fibres bicomposantes, seul un des composants a un point de fusion inférieur à la température de liage thermique.

Le traitement thermique peut se faire par contact avec une surface chaude, par induction avec des ondes énergétiques, par conduction ou échange avec de l'air chauffé. Ce traitement a pour principale fonction le liage du non-tissé 1, mais peut également avoir une fonction de thermostabilisation du produit pour éviter un retrait thermique pendant l'emploi ou la finition du produit après fabrication. Ainsi, on peut choisir un traitement à une température beaucoup plus élevée que le point de fusion des fibres liantes 5,6 notamment approchant la température de la fixation thermique des fibres constructives 7, 8.

Le procédé de fabrication peut se compléter par des finitions, comme imprégnation avec des traitements chimiques ou liants. Aussi une enduction ou complexage avec des matières d'aspect, comme tissus, non-tissés, tricots, grilles, flock, cuir synthétique, cuir ou films divers peut se faire. Ce complexage est possible par encollage avec colle pulvérisée, film thermocollant ou laminage avec thermocolle (hotmelt adhesive).

Pour que le produit soit parfaitement recyclable, il est important qu'il soit entièrement synthétique. On choisit de préférence toutes les fibres dans la même famille de polymères chimiques. Ceci veut dire qu'on préfère, par exemple un mélange de 100% polyester ou 100% polyoléfine ou 100% polyamide.

Le produit fini peut se présenter sous forme de plaques planes qui sont mises en forme ultérieurement. Les fibres liantes utilisées (ou la partie liante des fibres bicomposantes) étant thermoplastiques c'est-à-dire non susceptibles de cristalliser, le thermoliage n'est pas irréversible. Le produit peut donc être moulé thermiquement éventuellement ultérieurement bien qu'il ait déjà subi un premier thermoliage.

Les Fig. 2 à 5 montrent différents schémas de lignes de production sur lesquelles on peut mettre en oeuvre le procédé selon l'invention.

La Fig. 2 représente schématiquement une ligne de production suivant l'invention comportant trois cardes 11 et un étaleur-nappeur 12. Deux cardes 11a, 11b sont disposées en ligne et sont destinées à former les couches extérieures 3, 4. La carde 11c et l'étaleur-nappeur 12 sont destinés à former la couche intérieure 2 et sont situés entre les cardes 11a, 11b des couches extérieures et disposés perpendiculaire à la ligne des cardes 11a, 11b. Les trois couches passent alors dans une station d'aiguilletage 13 densifiant les couches externes 3, 4 puis dans une station de thermoliage 14 et enfin dans une station de calandrage 15 pour le lissage des surfaces du non-tissé 1 et découpe à dimension voulue.

La Fig. 3 représente une première alternative. Les trois cardes 11 sont disposées perpendiculairement à la ligne de production. Chaque carde 11 est suivie d'un étaleur-nappeur 12. En utilisant des cardes conventionnelles il faut une carde et un étaleur-nappeur par couche de fibres désirées.

En utilisant une carde de type "split-feed" comportant deux compartiments pouvant contenir des mélanges de fibres différents, seuls deux groupes de carde plus étaleur sont alors nécessaires pour obtenir un non-tissé de trois couches. Les stations d'aiguilletage 13, de liage thermique 14 et de calandrage 15 sont les mêmes qu'à la Fig. 2.

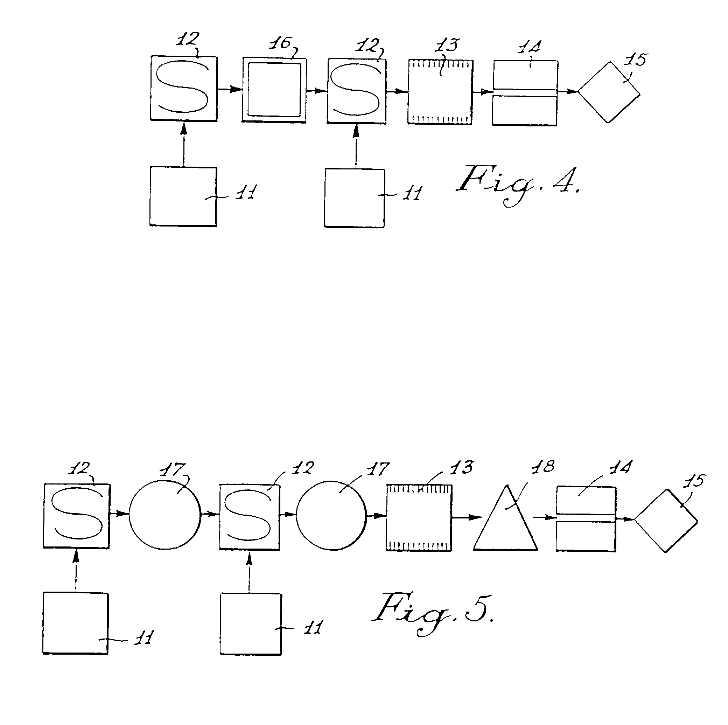

La Fig. 4 représente une seconde alternative comportant trois cardes. Ici la carde destinée à former la couche centrale 2 est une carde 16 de type pneumatique (Airlay: type Fehrer V21-K12 ou K21, type D.O.A. ou autres types connus de l'homme du métier) ou est constituée d'un système 16 permettant de plisser ou d'onduler une nappe de fibre (système CORWEB tel que décrit dans le brevet US 4,111,733 ou système STRUTO tel que décrit dans le brevet allemand DD 287 544-A5). Ces systèmes 16 permettent d'apporter une structure tridimensionnelle à la couche intérieure 2 du non-tissé 1 suivant l'invention.

Cette variante permet de réaliser un produit fini plus épais sans augmenter son poids. Cette variante permet encore d'augmenter la résilience du produit fini.

La Fig. 5 représente une autre alternative d'une ligne de production suivant l'invention comportant deux cardes 11 et deux étaleurs-nappeurs 12 disposés perpendiculairement à la ligne de production. Une station 17 est intercalée entre les deux étaleurs-nappeurs 12 dans laquelle des renforts physiques sont déroulés et disposés entre les couches de fibres. Ces renforts peuvent être notamment des tissus, non-tissés, tricots, grilles ou films divers.

Une station 18 de traitement chimique peut également être ajoutée après la station d'aiguilletage 13. Ce traitement chimique peut consister en une imprégnation de la nappe par une résine polyester ou en une pulvérisation en surface d'une telle résine. Le traitement chimique peut également consister en une enduction d'une pâte ou poudre thermoplaste (hotmelt) (par saupoudrage, racle, rouleau gravé ou autres systèmes bien connus de l'homme du métier).

La ligne de production suivant la Fig. 5 permet d'obtenir un non-tissé composé de plus de trois couches.

D'autres non-tissés composés de plus de trois couches peuvent également être réalisés en ajoutant une couche de finition dont la fonction est par exemple de fournir un toucher doux et moelleux.

Une telle couche peut provenir d'une quatrième carde 11 disposée en début de ligne de production comme schématisée par exemple à la Fig. 3. Cette couche de finition peut être constituée d'un mélange de fibres comportant par exemple de 0 à 25% de fibres liantes à bas points de fusion.

### Avantages.

Un des avantages du procédé suivant l'invention est que l'on obtient avec un procédé simple, et rapide un non-tissé rigide et que celui-ci est thermoformable, les fibres utilisées n'étant pas cristallisées lors du thermoliage.

Un autre avantage est que les non-tissés suivant l'invention sont résistants et présentent de bonnes caractéristiques de déformabilité et flexibilité. Plus d'explications sont données à ce sujet, à la rubrique "tests comparatifs".

Un autre avantage est que le procédé suivant l'invention permet d'obtenir la structure sandwich avec plusieurs couches en une fois et ne nécessite plus de combinaison de nappes de fibres déjà préliées.

L'aiguilletage dans les couches extérieures a comme avantage d'augmenter la ténacité de couches en surface sans limiter la déformabilité du produit.

Le liage thermique a pour but de lier la couche intérieure et a comme avantage d'empêcher le retrait thermique de l'ensemble. Ainsi le procédé suivant l'invention donne un produit qui peut être préchauffé et moulé ensuite à froid en combinaison avec des couches d'aspect, sensibles à la température.

Un autre avantage est que la composition du non-tissé suivant l'invention est homogène et celui-ci peut donc être recyclé.

L'invention peut être mieux comprise à l'aide des exemples de réalisation décrits ci-après :

### Exemple 1

Le non-tissé 1 suivant l'invention est constitué de trois couches de fibres disposées en sandwich. La couche intérieure 2 comporte 50% de fibres constructives 8 d'une épaisseur de 12 deniers (13,33 dtex) et de longueur de coupe de 90 mm et 50% de fibres liantes 6 de type bicomposant à structure coaxiale. L'axe de la fibre 6 est du polyéthylènetéréphtalate et le composant externe fusible est un copolyester dont le point de fusion est de 195°C. Ces fibres 6 ont une épaisseur de 4 deniers (4,44 dtex) et une longueur de coupe de 51 mm. Cette couche intérieure 2 du non-tissé 1 présente un poids de 475 g par m².

Les couches extérieures 3, 4 du non-tissé 1 comportent 75% de fibres liantes 5. Ces fibres 5 ont les mêmes caractéristiques que les fibres liantes 6 décrites ci-dessus. Les couches extérieures 3, 4 comportent 25% de fibres constructives 7 d'une épaisseur de 1,5 denier (1,67 dtex) et de longueur de coupe de 38 mm. Chacune des deux couches extérieures 3, 4 du non-tissé 1 présente un poids de 160gr par m².

La structure sandwich est mise en oeuvre à l'aide d'une ligne de production telle que représentée à la Fig. 3. Après mélange des fibres constructives 7,8 et liantes 5,6 telles qu'indiquées ci-dessus, dans les proportions respectives telles qu'indiquées on procède au cardage des nappes à l'aide des cardes conventionnelles 11.

Après cardage, les nappes de fibres passent chacune dans un étaleur-nappeur 12 jusqu'à obtention du poids au m² souhaité.

La structure sandwich ainsi obtenue subit alors une densification par aiguilletage progressif. Ceci est réalisé avec deux aiguilleteuses dont les aiguilles sont de type SINGER (15x18x40x3,5 CB 15) réglées avec pénétration uniquement dans les couches externes 3, 4 du non-tissé 1, en particulier la pénétration des aiguilles atteint 10 mm d'épaisseur. Une des aiguilleteuses travaille par en-dessous, l'autre par au-dessus de la nappe. La nappe passe alors à la station de liage thermique 14 par passage dans un four avec ventilation forcée à l'air chaud à 200°C.

Cette température assure la fusion de la partie liante (composant externe) des fibres bicomposantes 5, 6 et est inférieure à la température de fusion des fibres constructives 7, 8 et inférieure à la température de fusion de l'axe des fibres liantes bicomposantes 5, 6.

La nappe ainsi obtenue est encore souple, elle pèse 800 g par m² et a une épaisseur moyenne de 35 mm. Cette nappe est utilisée pour moulage à une température de 200°C pendant 1 minute dans une presse à mouler avec pression de 50 bars jusqu'à une épaisseur de 5 mm.

### Exemple 2

Le non-tissé 1' suivant cet exemple de réalisation de l'invention est également constitué de trois couches de fibres. La couche intérieure 2' du non-tissé 1' comporte 50% de fibres constructives 8' d'une épaisseur de 15 deniers (16,67 dtex) et de longueur de coupe de 60 mm et 50% de fibres liantes 6 bicomposantes telles que décrites à l'exemple 1. Cette couche intérieure 2' du non-tissé 1' présente un poids de 400 g par m².

Les couches extérieures 3', 4' du non-tissé 1' comportent 75% de fibres liantes 5 bicomposantes identiques aux fibres liantes 6 décrites dans l'exemple 1 et 25% de fibres constructives 7' à base de polyester de récupération d'une épaisseur de 6 deniers (6,67 dtex) et de longueur de coupe de 60 mm. Ces couches 3', 4' présentent chacune un poids de 200 g par m².

L'emploi de ces fibres de récupération est la preuve que le produit à 100% de polyester est très bien recyclable dans le même emploi. Le non-tissé 1' de l'exemple 2 est fabriqué selon les mêmes méthodes et paramètres qu'à l'exemple 1.

### Exemple 3

Le non-tissé 1" suivant le troisième exemple de réalisation de l'invention comporte cinq couches de fibres : une couche externe 3", une grille de renfort 9, une couche intérieure 2, une grille de renfort 9 et une couche externe 4".

Les couches externes 3", 4" comportent 75% de fibres liantes bicomposantes 5 identiques aux fibres liantes bicomposantes 6 décrites à l'exemple 1 et 25% de fibres constructives 7" à base de poly(bisméthylènecyclohexanetéréphtalate) d'une épaisseur de 6 deniers (6,67 dtex) et d'une longueur de coupe de 50 mm. Un exemple d'une telle fibre 7" est la fibre commercialisée sous le nom KODEL® 211. La couche centrale 2" comporte 50% de fibres liantes 6 telles que décrites à l'exemple 1 et 50% de fibres constructives 8" également à base de poly(bisméthylènecyclohexanetéréphtalate) d'une épaisseur de 25 deniers (27,78 dtex) et d'une longueur de coupe de 75 mm. Un exemple d'une telle fibre 8" est la fibre commercialisée sous le nom KODEL® 231.

Entre les couches externes 3", 4" et interne 2", sont placées deux nappes de renforts 9 constituées de filaments de 550 dtex et pesant 75 g par m².

Ce non-tissé 1" est mis en oeuvre à l'aide d'une ligne de production telle que schématisée à la Fig. 5.

### Tests comparatifs.

Les non-tissés 1, 1', 1" tels que décrits dans les exemples ci-dessus ont été testés et comparés à deux produits standards utilisés dans l'industrie automobile. Le premier standard est composé d'une âme de mousse de polyuréthane rigide avec deux couches externes en fibre de verre, réalisé suivant le brevet US 5,082,716. Le deuxième standard est constitué d'une âme de mousse de polyuréthanne rigide avec deux couches externes à base de non-tissé imprégné, réalisé suivant le brevet US 5,049,439.

Les caractéristiques testées sont la rigidité mesurée par la force de rupture et la déformabilité ou flexibilité.

La méthode utilisée correspond à la méthode de GENERAL MOTORS, connue sous la référence GME 60.293, ou à la méthode de RENAULT, connue sous le no 1643 ainsi qu'à la norme DIN 52352. Dans ces méthodes un dynamomètre est utilisé pour déformer, en son centre, un échantillon posé sur deux supports. Les tests ont été effectués avec des échantillons de 100 mm sur 250 mm. L'appareil mesure la force de rupture ainsi que la déformation elle-même (nommée la flèche à la rupture). Les produits standards se caractérisent dans ce test par une force de rupture assez élevée mais avec une flèche à la rupture très faible. Ceci est la cause principale de rupture des produits, par exemple des pavillons d'aspect lors de leur positionnement dans une voiture. Deux valeurs importantes pour la mesure de la déformabilité ont été ajoutées : la flèche obtenue en appliquant une force égale à la moitié de la force de rupture et appelée "déformabilité" et le "Moment de flexion" c'est-à-dire la force de rupture multipliée par la flèche à la rupture et divisée par quatre. Une valeur maximum de ces paramètres est souhaitable tout en gardant une bonne rigidité exprimée par une force de rupture satisfaisante. Une norme utilisée actuellement exige une force de rupture de 10 N.

Les résultats sont regroupés dans le tableau suivant duquel il ressort clairement que les non-tissés 1, 1', 1" suivant l'invention présentent une rigidité suffisante (la force de rupture est supérieure à 10 N) tout en présentant une plus grand flexibilité et déformabilité que les échantillons standards.

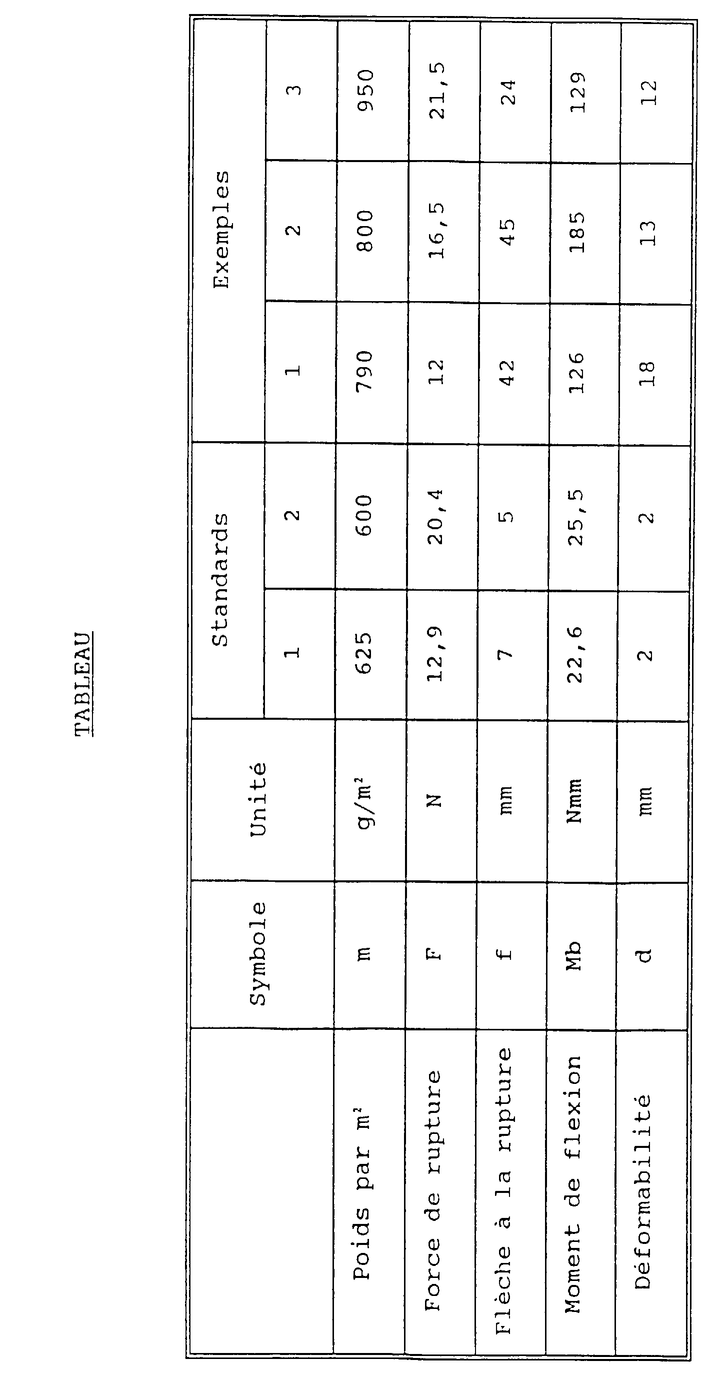

## Revendications

1. Non-tissé (1) comportant deux couches de fibres extérieures (3,4) et au moins une couche de fibres intérieures (2) différente des couches extérieures (3,4), le non-tissé (1) comprenant des fibres constructives (7,8) et des fibres liantes (5, 6), les fibres liantes (5, 6) étant composées au moins partiellement d'au moins un polymère thermoplastique dont le point de fusion est inférieur à celui des fibres constructives (7,8), le non-tissé (1) étant caractérisé en ce que la ou les couches intérieures (2) représentent de 20 à 90 % en poids du non-tissé (1) et les couches extérieures (3,4) représentent chacune entre 5 et 40 % en poids du non-tissé (1), les couches extérieures (3,4) comportant au minimum 40 % en poids de fibres liantes (5), et en ce qu'il est densifié par aiguilletage de part et d'autre jusqu'à une profondeur déterminée, une zone centrale non densifiée par aiguilletage subsistant, la teneur (pourcentage en poids) en polymère dont le point de fusion est inférieur à celui des fibres constructives (7,8) étant plus grande dans les couches extérieures (3,4) que dans la ou les couche(s) intérieure (s) (2).

2. Non-tissé suivant la revendication 1, caractérisé en ce que la ou les couches intérieures (2) représentent 40 à 70 % en poids du non-tissé (1) et les couches extérieures (3,4) représentent chacune 15 à 30 % en poids du non-tissé (1).

3. Non-tissé suivant l'une quelconque des revendications précédentes, caractérisé en ce que les fibres liantes (5,6) sont des fibres bicomposantes.

4. Non-tissé suivant l'une quelconque des revendications précédentes, caractérisé en ce que les couches extérieures (3,4) comportent de 60 à 80 % de fibres liantes (5) et de 20 à 40 % de fibres constructives (7).

5. Non-tissé suivant l'une quelconques des revendications précédentes, caractérisé en ce que la ou les couches intérieures (2) comportent de 20 à 100 % de fibres liantes (6) et de 0 à 80 % de fibres constructives (8).

6. Non-tissé suivant la revendication 5, caractérisé en ce que la ou les couches intérieures (2) comportent de préférence de 40 à 60 % de fibres liantes (5) et 40 à 60 % de fibres constructives (8).

7. Non-tissé suivant l'une quelconque des revendications précédentes, caractérisé en ce que les fibres constructives (7) couches extérieures (3, 4) sont plus fines que les fibres constructives (8) de la ou des couches intérieures (2).

8. Non-tissé suivant l'une quelconque des revendications précédentes, caractérisé en ce que les fibres liantes (5) des couches extérieures (3,4) ont une épaisseur comprise entre 0,5 et 28 dtex.

9. Non-tissé suivant la revendication 8, caractérisé en ce que les fibres liantes (5) des couches extérieures (3,4) ont de préférence une épaisseur comprise entre 1,5 et 10 dtex.

10. Non-tissé suivant l'une quelconque des revendications précédentes, caractérisé en ce que les fibres constructives (7) des couches extérieures (3,4) ont une épaisseur comprise entre 0,5 et 28 dtex.

11. Non-tissé suivant la revendication 10, caractérisé en ce que les fibres constructives (7) des couches extérieures (3,4) ont de préférence une épaisseur comprise entre 1,5 et 12 dtex.

12. Non-tissé suivant l'une quelconque des revendications précédentes, caractérisé en ce que les fibres liantes (6) de la ou des couches intérieures (2) ont une épaisseur comprise entre 3 et 40 dtex.

13. Non-tissé suivant la revendication 12, caractérisé en ce que les fibres liantes (6) de la ou des couches intérieures (2) ont de préférence une épaisseur comprise entre 4 et 28 dtex.

14. Non-tissé suivant l'une quelconque des revendications précédentes, caractérisé en ce que les fibres constructives (8) de la ou des couches intérieures (2) ont une épaisseur comprise entre 3 et 100 dtex.

15. Non-tissé suivant la revendication 14, caractérisé en ce que les fibres constructives (8) ont de préférence une épaisseur comprise entre 6 et 28 dtex.

16. Non-tissé suivant l'une quelconque des revendications précédentes, caractérisé en ce que les fibres appartiennent toutes à une même famille de polymères.

17. Non-tissé suivant la revendication 16, caractérisé en ce que les fibres comprennent 100 % de polyester.

18. Non-tissé suivant la revendication 16, caractérisé en ce que les fibres comprennent 100 % de polyamide.

19. Non-tissé suivant la revendication 16, caractérisé en ce que les fibres comprennent 100 % de polyoléfine.

20. Non-tissé suivant l'une quelconque des revendications précédentes, caractérisé en ce qu'il est auto-portant.

21. Non-tissé suivant l'une quelconque des revendications précédentes, caractérisé en ce qu'il est thermoformable.

22. Non-tissé suivant l'une quelconque des revendications précédentes, caractérisé en ce qu'il comporte une couche de finition.

23. Non-tissé suivant l'une quelconque des revendications précédentes, caractérisé en ce qu'il comporte un ou plusieurs renforts physiques.

24. Procédé de fabrication d'un non-tissé (1) multicouche comportant des fibres constructives (7,8) et des fibres liantes (5,6), les fibres liantes (5,6) étant composées au moins partiellement d'au moins un polymère thermoplastique dont le point de fusion est inférieur à celui des fibres constructives (7,8), procédé caractérisé par les étapes suivantes :
a) on construit par cardage et nappage une structure multicouche "sandwich" comportant au moins trois couches (2,3,4) de fibres textiles coupées ou de filaments, la ou les couches intérieures (2) représentant 20 à 90 % en poids du non-tissé (1) et les couches extérieures (3, 4) représentant chacune entre 5 et 40 % en poids du non-tissé (1), les couches extérieures (3,4) comportant au minimum 40 % en poids de fibres liantes (5),
b) on procède à un aiguilletage superficiel, de part et d'autre du non-tissé (1) jusqu'à une profondeur déterminée, en laissant subsister un zone centrale non aiguilletée,
c) on procède au thermoliage du non-tissé (1).

25. Procédé suivant la revendication 24, caractérisé en ce que les fibres liantes (5, 6) sont de type bicomposantes.

26. Procédé suivant l'une quelconque des revendication 24 et 25, caractérisé en ce que la ou les couches intérieures (2) comportent de 20 à 90 % de fibres liantes (6).

27. Procédé suivant l'une quelconque des revendications 24 à 26, caractérisé en ce que lors de l'étape de nappage, des renforts sont ajoutés.

28. Procédé suivant l'une quelconque des revendications 24 à 27, caractérisé en ce qu'il comporte une étape de finitions.

29. Procédé suivant l'une quelconque des revendications 24 à 28, caractérisé en ce qu'il comporte une étape de moulage.

## Patentansprüche

1. Vliesstoff (1) mit zwei Außenfaserschichten (3, 4) und mindestens einer von diesen verschiedenen Innenfaserschicht (2), wobei der Vliesstoff (1) konstruktive Fasern (7, 8) und verbindende Fasern (5, 6) aufweist, wobei die verbindenden Fasern (5, 6) mindestens teilweise aus mindestens einem thermoplastischen Polymer bestehen, dessen Schmelzpunkt unter dem der konstruktiven Fasern (7, 8) liegt, dadurch gekennzeichnet, daß die Innenschicht(en) (2) 20 bis 90 Gew.-% des Vliesstoffes (1) und die Außenschichten (3, 4) jede zwischen 5 und 40 Gew.-% des Vliesstoffes (1) darstellen, die Außenschichten (3, 4) mindestens 40 Gew.-% der verbindenden Fasern (5) einnehmen und daß der Vliesstoff (1) durch Nadeln auf beiden Seiten bis auf eine vorgegebene Tiefe verdichtet ist und eine nicht durch Nadeln verdichtete zentrale Zone verbleibt und der Gehalt (Gew.-%) an Polymer, dessen Schmelzpunkt unter dem der konstruktiven Fasern (7, 8) liegt, in den Außenschichten (3, 4) größer als in der (den) Innenschicht(en) (2) ist.

2. Vliesstoff nach Anspruch 1, dadurch gekennzeichnet, daß die Innenschicht (en) (2) 40 bis 70 Gew.-% des Vliesstoffes (1) und die Außenschichten (3, 4) jede 15 bis 30 Gew.-% des Vliesstoffes (1) darstellen.

3. Vliesstoff nach irgendeinem der vorhergehenden Patentansprüche, dadurch gekennzeichnet, daß die verbindenden Fasern (5, 6) Zwei-Komponenten-Fasern sind.

4. Vliesstoff nach irgendeinem der vorhergehenden Patentansprüche, dadurch gekennzeichnet, daß die Außenschichten (3, 4) 60 bis 80 % verbindende Fasern (5) und 20 bis 40 % konstruktive Fasern (7) aufweisen.

5. Vliesstoff nach irgendeinem der vorhergehenden Patentansprüche, dadurch gekennzeichnet, daß die Innenschicht(en) (2) 20 bis 100 % verbindende Fasern und 0 bis 80 % konstruktive Fasern aufweist (aufweisen).

6. Vliesstoff nach Anspruch 5, dadurch gekennzeichnet, daß die Innenschicht(en) (2) vorzugsweise 40 bis 60 % verbindende Fasern und 40 bis 60 % konstruktive Fasern aufweist (aufweisen).

7. Vliesstoff nach irgendeinem der vorhergehenden Patentansprüche, dadurch gekennzeichnet, daß die konstruktiven Fasern (7) der Außenschichten (3, 4) feiner als die konstruktiven Fasern (8) der Innenschicht(en) (2) sind.

8. Vliesstoff nach irgendeinem der vorhergehenden Patentansprüche, dadurch gekennzeichnet, daß die verbindenden Fasern (5) der Außenschichten (3, 4) eine Stärke zwischen 0,5 und 28 dtex aufweisen.

9. Vliesstoff nach Anspruch 8, dadurch gekennzeichnet, daß die verbindenden Fasern (5) der Außenschichten (3, 4) vorzugsweise eine Stärke zwischen 1,5 und 10 dtex aufweisen.

10. Vliesstoff nach irgendeinem der vorhergehenden Patentansprüche, dadurch gekennzeichnet, daß die konstruktiven Fasern (7) der Außenschichten (3, 4) eine Stärke zwischen 0,5 und 28 dtex aufweisen.

11. Vliesstoff nach Patentanspruch 10, dadurch gekennzeichnet, daß die konstruktiven Fasern (7) der Außenschichten (3, 4) vorzugsweise eine Stärke zwischen 1,5 und 12 dtex aufweisen.

12. Vliesstoff nach irgendeinem der vorhergehenden Patentansprüche, dadurch gekennzeichnet, daß die verbindenden Fasern (6) der Innenschicht(en) (2) eine Stärke zwischen 3 und 40 dtex aufweisen.

13. Vliesstoff nach Anspruch 12, dadurch gekennzeichnet, daß die verbindenden Fasern (6) der Innenschicht(en) (2) vorzugsweise eine Stärke zwischen 4 und 28 dtex aufweisen.

14. Vliesstoff nach irgendeinem der vorhergehenden Patentansprüche, dadurch gekennzeichnet, daß die konstruktiven Fasern (8) der Innenschicht(en) (2) eine Stärke zwischen 3 und 100 dtex aufweisen.

15. Vliesstoff nach Patentanspruch 14, dadurch gekennzeichnet, daß die konstruktiven Fasern (8) vorzugsweise eine Stärke zwischen 6 und 28 dtex aufweisen.

16. Vliesstoff nach irgendeinem der vorhergehenden Patentansprüche, dadurch gekennzeichnet, daß die Fasern sämtlich der gleichen Polymerenfamilie angehören.

17. Vliesstoff nach Patentanspruch 16, dadurch gekennzeichnet, daß die Fasern 100 % Polyester enthalten.

18. Vliesstoff nach Patentanspruch 16, dadurch gekennzeichnet, daß die Fasern 100 % Polyamid enthalten.

19. Vliesstoff nach Patentanspruch 16, dadurch gekennzeichnet, daß die Fasern 100 % Polyolefin enthalten.

20. Vliesstoff nach irgendeinem der vorhergehenden Patentansprüche, dadurch gekennzeichnet, daß er selbsttragend ist.

21. Vliesstoff nach irgendeinem der vorhergehenden Patentansprüche, dadurch gekennzeichnet, daß er wärmeverformbar ist.

22. Vliesstoff nach irgendeinem der vorhergehenden Patentansprüche, dadurch gekennzeichnet, daß er eine endbearbeitete Schicht aufweist.

23. Vliesstoff nach irgendeinem der vorhergehenden Patentansprüche, dadurch gekennzeichnet, daß er eine oder mehrere physische Verstärkungen aufweist.

24. Verfahren zum Herstellen eines mehrschichtigen Vliesstoffes (1) aus konstruktiven Fasern (7, 8) und verbindenden Fasern (5, 6), wobei die verbindenden Fasern (5, 6) mindestens teilweise aus mindestens einem thermoplastischen Polymer bestehen, dessen Schmelzpunkt unter dem dem konstruktiven Fasern (7, 8) liegt, gekennzeichnet durch die folgenden Schritte:
(a) man konstruiert durch Kardieren und Wickeln eine vielschichtige "Sandwich"-Struktur aus mindestens drei Schichten (2, 3, 4) aus geschnittenen Textilfasern oder Endlosfasern, wobei die Innenschicht(en) (2) 20 bis 90 Gew.-% des Vliesstoffes (1) und die Außenschichten (3, 4) jede zwischen 5 und 40 Gew.-% des Vliesstoffes (1) und die Außenschichten (3, 4) mindestens 40 Gew.-% der verbindenden Fasern (5) darstellen,
(b) man nimmt ein Nadeln an der Oberfläche auf beiden Seiten des Vliesstoffes (1) bis zu einer vorbestimmten Tiefe vor und beläßt eine nichtgenadelte zentrale Zone,
(c) man nimmt eine Wärmebindung des Vliesstoffes (1) vor.

25. Verfahren nach Anspruch 24, dadurch gekennzeichnet, daß die verbindenden Fasern (5, 6) Zwei-Komponenten-Fasern sind.

26. Verfahren nach irgendeinem der Patentansprüche 24 und 25, dadurch gekennzeichnet, daß die Innenschicht(en) (2) 20 bis 90 % verbindende Fasern (6) aufweist (aufweisen).

27. Verfahren nach irgendeinem der Patentansprüche 24 bis 26, dadurch gekennzeichnet, daß während der Wickelstufe Verstärkungen zugefügt werden.

28. Verfahren nach irgendeinem der Patentansprüche 24 bis 27, dadurch gekennzeichnet, daß es eine Endbearbeitungsstufe aufweist.

29. Verfahren nach irgendeinem der Patentansprüche 24 bis 28, dadurch gekennzeichnet, daß es eine Formstufe aufweist.

## Claims

1. Nonwoven (1) comprising two outer fibre layers (3, 4) and at least one inner fibre layer (2) 5 different from the outer layers (3, 4), the nonwoven (1) comprising constructive fibres (7, 8) and binding fibres (5, 6), the binding fibres (5, 6) being composed at least partially of at least one thermoplastic polymer, the melting point of which is lower than that of the constructive fibres (7, 8), the nonwoven (1) being characterized in that the inner layer or inner layers (2) represent from 20 to 90% by weight of the nonwoven (1), and the outer layers (3, 4) each represent between 5 and 40% by weight of the nonwoven (1), the outer layers (3, 4) comprising at the very least 40% by weight of binding fibres (5), and in that it is densified by needling on either side to a specific depth, there remaining a central zone not densified by needling, and the content (percentage by weight) of polymer, the melting point of which is lower than that of the constructive fibres (7, 8), being greater in the outer layers (3, 4) than in the inner layer or inner layers (2).

2. Nonwoven according to claim 1, characterized in that the inner layer or inner layers (2) represent 40 to 70 % by weight of the nonwoven (1), and the outer layers (3, 4) each represent 15 to 30 % by weight of the nonwoven (1).

3. Nonwoven according to any one of the preceding claims, characterized in that the binding fibres (5, 6) are two-component fibres.

4. Nonwoven according to any one of the preceding claims, characterized in that the outer layers (3, 4) comprise from 60 to 80 % of binding fibres (5) and from 20 to 40 % of constructive fibres (7).

5. Nonwoven according to any one of the preceding claims, characterized in that the inner layer or inner layers (2) comprise from 20 to 100 % of binding fibres (6) and from 0 to 80 % of constructive fibres (8).

6. Nonwoven according to claim 5, characterized in that the inner layer or inner layers (2) comprise preferably from 40 to 60% of binding fibres (5) and 40 to 60% of constructive fibres (8).

7. Nonwoven according to any one of the preceding claims, characterized in that the constructive fibres (7) of the outer layers (3, 4) are finer than the constructive fibres (8) of the inner layer or inner layers (2).

8. Nonwoven according to any one of the opreceding claims, characterized in that the binding fibres (5) of the outer layers have a thickness of between 0.5 and 28 dtex.

9. Nonwoven according to claim 8, characterized in that the binding fibres (5) of the outer layers (3, 4) preferably have a thickness of between 1.5 and 10 dtex.

10. Nonwoven according to any one of the preceding claims, characterized in that the constructive fibres (7) of the outer layers (3, 4) have a thickness of between 0.5 to 28 dtex.

11. Nonwoven according to any one of the preceding claims, characterized in that the constructive fibres (7) of the outer layers (3, 4) preferably have a thickness of between 1.5 to 12 dtex.

12. Nonwoven according to any one of the preceding claims, characterized in that the binding fibres (6) of the inner layer or inner layers (2) have a thickness of between 3 and 40 dtex.

13. Nonwoven according to claim 12, characterized in that the binding fibres (6) of the inner layer or inner layers (2) preferably have a thickness of between 4 and 28 dtex.

14. Nonwoven according to any one of the preceding claims, characterized in that the constructive fibres (8) of the inner layer or inner layers (2) have a thickness of between 3 and 100 dtex.

15. Nonwoven according to claim 14, characterized in that the constructive fibres (8) preferably have a thickness of between 6 and 28 dtex.

16. Nonwoven according to any one of the preceding claims, characterized in that the fibres all belong to the same family of polymers.

17. Nonwoven according to claim 16, characterized in that the fibres comprise 100 % polyester.

18. Nonwoven according to claim 16, characterized in that the fibres comprise 100 % polyamide.

19. Nonwoven according to claim 16, characterized in that the fibres comprise 100 % polyolefin.

20. Nonwoven according to any one of the preceding claims, characterized in that it is self-supporting.

21. Nonwoven according to any one of the preceding claims, characterized in that it is thermoformable.

22. Nonwoven according to any one of the preceding claims, characterized in that it comprises a finishing layer.

23. Nonwoven according to any one of the preceding claims, characterized in that it comprises one or more physical reinforcements.

24. Process for the production of a multi-layer nonwoven (1) comprising constructive fibres (7, 8) and binding fibres (5, 6), the binding fibres (5, 6) being composed at least partially of at least one thermoplastic polymer, the melting point of which is lower than that of the constructive fibres (7, 8), the said process being characterized by the following steps :
(a) a multi-layer "sandwich" structure comprising at least three layers (2, 3, 4) of cut textile fibres or of filaments is constructed by carding and lapping, the inner layer (2) or inner layers representing from 20 to 90 % by weight of the nonwoven (1), and the outer layers (3, 4) each representing between 5 and 40 % by weight of the nonwoven (1), the outer layers (3, 4) comprising at the very least 40 % by weight of binding fibres (5),
(b) a superficial needling is carried out on either side of the nonwoven (1) to a specific depth, allowing a non-needled central zone to remain,
(c) the thermal binding of the nonwoven (1) is carried out.

25. Process according to claim 24, characterized in that the binding fibres (5, 6) are of the two-component type.

26. Process according to any one of claims 24 and 25, characterized in that the inner layer or inner layers (2) comprise from 20 to 90 % of binding fibres (6).

27. Process according to any one of claims 24 to 26, characterized in that reinforcements are added during the lapping step.

28. Process according to any one of claims 24 to 27, characterized in that it comprises a finishing step.

29. Process according to any one of claims 24 to 28, characterized in that it comprises a moulding step.
